Europäisches Patentamt

European Patent Office

Office européen des brevets

(19)

(11) **EP 1 297 932 A1**

(12) **EUROPEAN PATENT APPLICATION**

(43) Date of publication:
**02.04.2003 Bulletin 2003/14**

(51) Int Cl.⁷: **B27B 19/00, B23D 61/02**

(21) Application number: **02021573.7**

(22) Date of filing: **26.09.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **29.09.2001 GB 0123497**

(71) Applicant: **Black & Decker Inc.
Newark Delaware 19711 (US)**

(72) Inventor: **Walker, Andrew
Newton Hall, Durham DH1 5XF (GB)**

(74) Representative: **Bell, Ian Stephen et al
Black & Decker UK
210 Bath Road
Slough, Berkshire SL1 3YD (GB)**

(54) **A power tool**

(57)     A jigsaw (2) includes a scotch yoke mechanism
(18, 20, 26) for translating rotary output of a motor (4)
into linear reciprocating motion of the guide member
(26). Pivotally coupled to the guide member (26) both at
its front end (42) and its rear end (52) is an arcuately
shaped blade (40).

FIG. 2

EP 1 297 932 A1

**Description**

The present invention, in a first aspect, relates to a power tool for cutting into, or through a workpiece, the tool including a motor providing a rotary output; a motion translation mechanism coupled to the rotary output for converting said rotary output to an oscillating drive; a coupling mechanism for coupling a blade presented to the power tool and for use therewith to the motion translation mechanism, thereby to impart oscillating motion to said blade.

Such tools for cutting into, or through, a workpiece are well-known to those skilled in the art. All such tools operate by moving a cutting blade relative to the tool such that this cutting blade may penetrate the workpiece in the desired manner. Tools of this type fall generally into one of two categories.

A first category comprises those tools used to cut large workpieces and parts thereof. Such may be used, for example, by carpenters when constructing buildings or the like to cut large workpieces. This generally requires a high-power tool and so circular saws are used. Such saws use circular cutting blades with teeth spaced around the circumferential periphery thereof.

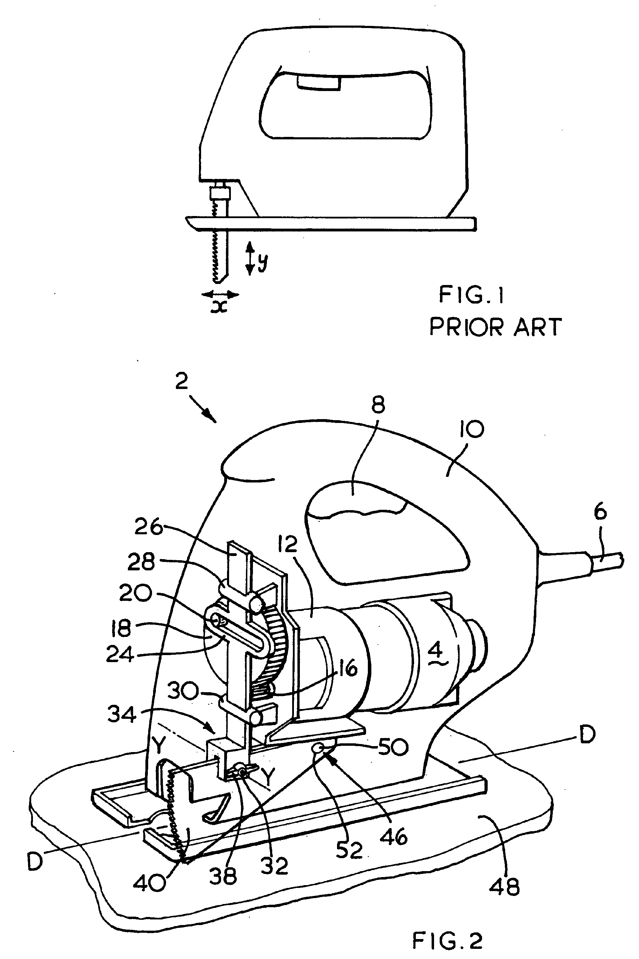

A second category comprises those tools used to cut less bulky workpieces or for generally more intricate work. Such tools offer more flexibility of use than tools of the first category not least because they are not limited to cutting in straight lines. Such tools are usually hand-held (whereas circular saws are either hand-held or surface mounted) and tend to use a linear reciprocating blade rather than a circular revolving blade. An example of one of this second category of tools, a so-called "jigsaw" is shown in figure 1. From this figure it can be seen that the blade of the jigsaw extends in two axes, *x* and *y.* The y-axis is the axis along which the blade is driven with a linear reciprocating action. The *x*-axis is the axis along which the blade is moved by a user in order to perform a cutting action.

Because, with the jigsaw of figure 1, the extent of the blade along the *x*-axis is very small compared to the extent of the blade along the *y*-axis, then the propensity for the blade to twist or distort during use is great. Clearly, if a user of the jigsaw moves the saw in anything other than a straight line along the *x*-axis, then the blade can bend torsionally about the *y*-axis. Also, if the jigsaw is tilted (out of the plane of the figure) in order to perform the known bevel cutting action, then the blade may bend so that it is no longer straight along the *y*-axis.

The above problems are all shortcomings associated with the second category of tools, but not with the first. This is because in the first category of tool, the cutting blade is circular and rotating and hence unable to bend to the same degree as those blades used with the second category of tool. However, flexibility of use of the first category is sacrificed for this enhanced blade stability over the second category.

It is thus one object of the present invention to at least alleviate the above-mentioned shortcomings by provision of a power tool having a stability of the first category of tools above, but with the flexibility of the second category of tool above.

According to a first aspect of the present invention, therefore, there is provided a power tool as set out in the opening paragraph characterised in that a pivot point is provided on the power tool, which pivot point, in addition to the coupling mechanism, is coupled to the said blade presented to the power tool. Thus by provision of a pivot point which, in addition to the conventional blade attachment means on the power tool, couples to a blade presented to the tool, a further blade support point is provided on the tool hence permitting making less likely the chances of blade distortion during use of the tool.

Preferably, the pivot point is a fulcrum for the blade in use of the tool. Use of the pivot point as a fulcrum means that the force applied to the tool by a user thereof may be applied through this point and hence to the workpiece.

Furthermore, the coupling mechanism may be pivotally coupled to a blade presented and coupled thereto. By use of such a pivotal coupling then this allows for several different shapes of blade to be used with the power tool, as the attitude of the blade to the tool may vary during use via a pivotal coupling. Additionally, a blade so presented to the tool may pivot about the pivot point.

Preferably, a blade presented to the tool is longer along its line of intended cutting than along any dimension of the blade. Thus, as compared with the known second category of power tool, the blade will be stronger along this line of action and hence less likely to suffer any distortion. Furthermore, this will aid the ability of the blade to accurately cut in straight lines.

Preferably, the line of action of the coupling mechanism is not in line with the cutting face of a blade presented to the power tool. This allows for the blade drive of the power tool to be off-set from the cutting face.

According to a further aspect of the present invention there is provided a jigsaw characterised in that the blade therefore is curviliear in shape and, more preferably, arcuate.

According to a yet further aspect of the present invention, there is provided a jigsaw characterised in that the blade therefor is mounted pivotally.

An embodiment of the present invention will now be described, by way of example only, and with reference to the accompanying drawings of which:

    Figure 2 illustrates a perspective partially cut-away view of a power tool in accordance with the present invention;
    Figure 3 shows a side view of the cut-away power tool of figure 2;
    Figure 4 shows an end view of the partially cut-away view of figure 2 from the front thereof;
Figure 5 shows a side view of a blade suitable for use with the power tool shown in the above figures;
Figure 6 shows alternative blades to that shown in figure 5;
Figure 6a shows a rectangular blade, and;
Figure 6b shows a trapezoidal blade, and;
Figure 7 shows schematically the movement of a blade (40) during a cutting action and how the elongate slot (42) interacts with stud (32).

Referring now to figures 2, 3 and 4 it can be seen that a power tool for cutting into or through a workpiece, in this example a jigsaw shown generally as 2, includes an electric motor (4) which here is powered by mains electricity from a power supply cable (6). The connection between the power supply cable (6) and the motor (4) is not shown in the drawings for clarity. Actuation of the motor (4) is achieved by way of an on-off trigger switch (8) formed in a handle (10) of the jigsaw (2). The handle (10) forms a dual function of enabling the user to be able to actuate the trigger (8) and also to be able to guide the jigsaw (2) in use as will be described further below.

The electric motor (4) is directly coupled to a gearbox (12) in conventional manner such that the high rotational low torque output of the motor (4) is converted to a lower rotational speed and higher torque dependent upon the application to which the jigsaw is to be put. It will be appreciated that a gearbox may or may not be necessary, dependent upon the type of power tool with which the motor is designed to be used. In this example, the gearbox (12) has an output spindle (14) terminating in an output cog (16). The output cog (16) will, therefore, rotate dependent upon activation of the motor (4) once the trigger switch (8) is squeezed.

The output cog (16) is in contact with a final rotary output cog (18) of much larger diameter than that of the output cog (16). In this example, the number of teeth spaced around the circumferential periphery of the cogs (16 and 18) are chosen to provide a further gear reduction to that of the gearbox (12). This feature is optional and may not be found on all jigsaws. This depends upon the use to which the jigsaw in question is being put. Those skilled in the art will appreciate that simple ratio between the number of teeth on the outer peripheral circumference of the cog (18) relative to those on the cog (16) (or indeed the diameter of the cogs (18) and (16)) may be used to calculate the gear reduction ratio.

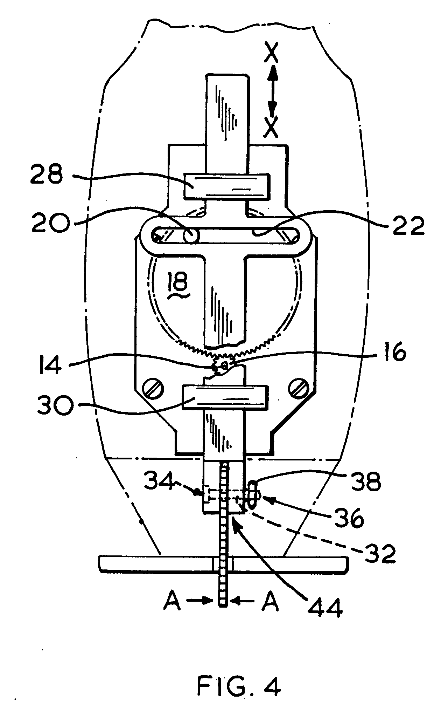

Eccentrically mounted with respect to its central drive axis on cog (18) is a cylindrical projection (20). This cylindrical projection will, obviously, exhibit a circular motion as the cog (18) rotates upon activation of the motor (4). The cylindrical projection couples with a motion translation mechanism, in this example a scotch yoke mechanism which comprises a linear elongate recess (22) formed within a bi-directional transverse projection (24) of a linear reciprocating guide (26). The guide (26) is constrained at its upper (28) and lower (30) portions such that the guide (26) is able to exhibit linear reciprocating motion only. The manner in which this linear reciprocating motion of the guide (26) is achieved is known to those skilled in the art. As the final output cog (18) rotates in a circular manner then because the cylindrical projection (20) is captivated within the recess (20) of the projection (24), the circular rotation of the output cog (18) will cause concomitant simple harmonic motion of the guide (26) in the direction X-X as shown in figure 4. In this manner, therefore, the combination of the eccentric spindle (20) mounted on the cog (18) and its interaction with the guide (26) via this scotch yoke mechanism provides a means for translating rotary output of the motor via the gearbox (12) into linear reciprocating motion of the guide (26).

It will be readily apparent that, in the example illustrated in figure 2 a scotch yoke mechanism is shown which provides a linear reciprocating output of the guide (26) from the rotary input of cog (18) and projection (20), any suitable oscillation motion is efficacious. The important feature here is that the rotary output of the motor (4) be translated to an oscillating motion for the tool head (40). A linear reciprocating motion for the blade (40) is simply one subset of the plurality of oscillating motions possible.

Below the lower guide portion (30) and formed on the guide (26) is a coupling mechanism, in this example a stud (32) projecting along the axis Y-Y as shown in figure 2. The proximal end (34) of the stud (32) relative to the guide (26) is rigidly coupled to the guide (26) whereas the distal end (36) of the stud (32) carries a screw thread. Mountable on and engageable with the screw thread (36) is a wing nut coupling (38) as will be described further below.

The stud (32) acts to engage with and support a blade (40) presented to the jigsaw (2). The blade (40) has an elongate slot (42) formed therein through which the stud (32) may project. The width of the elongate slot (42) is at least the same size as the diameter of the stud (32) but preferably marginally greater. The degree to which the width of the elongate slot (42) may be greater than the diameter of the stud (32) is a matter of degree. No exact dimensional limits need to be placed on this measurement, save that the purpose of having the width of the elongate slot (42) at least as large as the diameter of the stud (32) is to allow a pivotal relationship between the two such that the blade (40) may pivot about the stud (32) as the guide (26) moves up and down in its linear reciprocating motion.

To mount the blade (40) on the stud (32) first of all the stud (32) is removed from the guide (26) and the blade (40) put into position. The user needs to align the elongate slot (42) in a recess (44) formed in the lower portion of the guide (26) for accommodation of the blade (40) so that the stud (32) may be passed through the elongate slot (42). The user then secures the wing nut (38) to the distal end (36) of the stud (32) and tightens this up such that the blade (40) is mounted on the stud (32) and the stud (32) is unable to be removed from the guide (26).

It will be understood that the width of the recess (44) in the lower portion of the guide (26) needs to be at least as large as the width of the blade (40) as shown by the measurement A-A in figure 4. The purpose of this is to allow the blade to move freely within the recess (44) as the guide (26) is driven up and down in its linear reciprocating action.

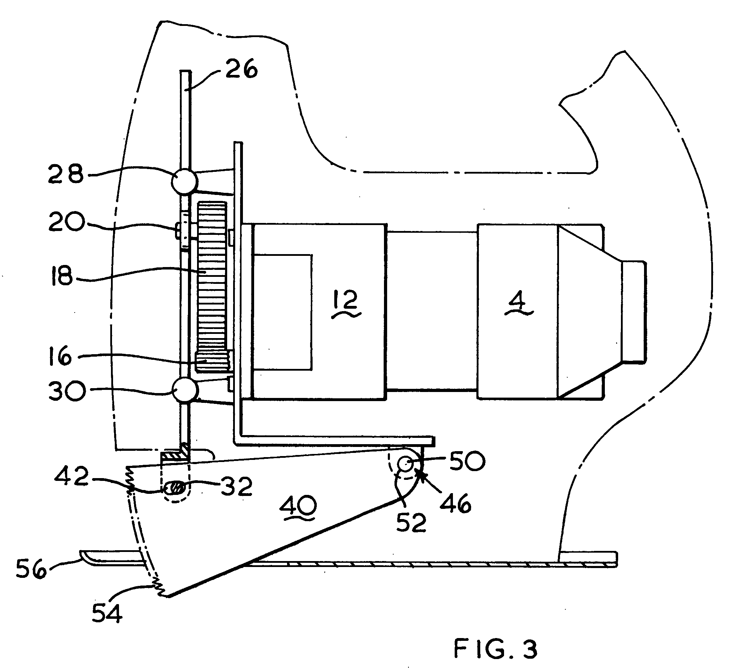

Referring particularly to figures 2 and 3 it can be seen that the jigsaw includes a pivot point (46) provided on the body of the jigsaw and, in this example, directly below the gearbox (12). The pivot point (46) is in addition to the stud (32) provided on the lower portion of the guide (26).

The purpose of the pivot point (46) is, like the stud (32) to provide a support position for the rear of the blade (40) and to allow the blade (40) to oscillate thereabout. In the example shown the pivot point (46) may act as a fulcrum to aid in movement of the blade (40) through a workpiece (48) (shown in figure 2) which is to be cut in use of the jigsaw (2).

More specifically, the pivot point (46) comprises a central stud (50) having a diameter less than that of the circular recess (52) formed in the rear portion of the blade (40) in order to mount the blade (40) over the stud (50) (the same reasoning follows here as did with the description above by reference to the stud (32) and the elongate slot (42) at the front of the blade (40)).

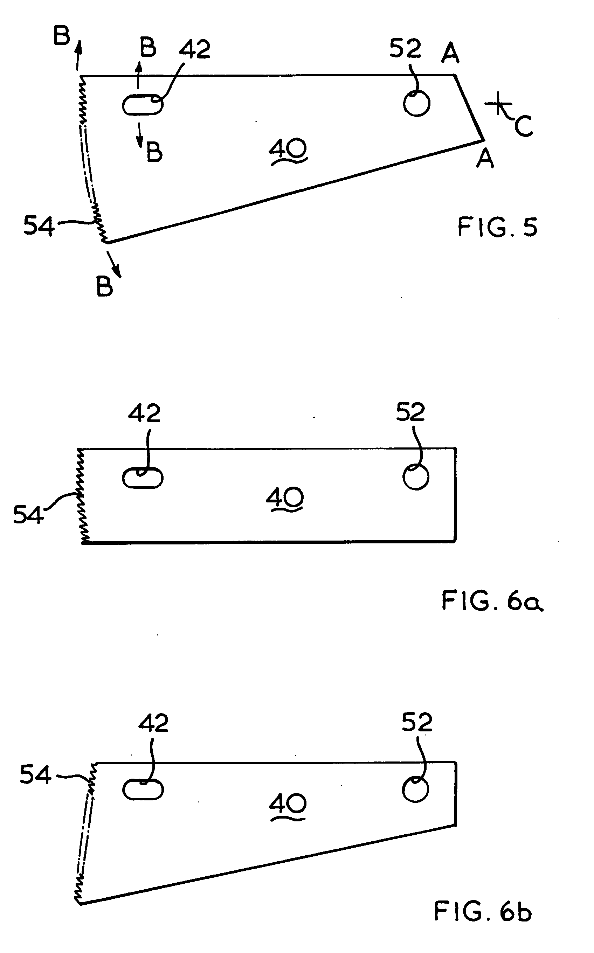

From the figures and the above description it will be apparent that on activation of the trigger (8) the rotational output of the motor (4) is converted via the scotch yoke mechanism into a linear reciprocating action of the guide (26). This means that, via the stud (32), the blade (40) is also driven in a linear reciprocating manner also at its front end. The rear end of the blade (40), by virtue of the interaction between the circular recess (52) and the stud (50) is pivoted about the stud (50). Reference also to figure 5 shows the movement of the blade (40) in more detail.

As can be seen from figure 5 the drive to the blade (40) occurs via the elongate slot (42) in a linear reciprocating manner as shown in the arrows B-B thereby. However, because the blade (40) is pivoted about point (52) then the forward periphery of the blade defined by the cutting surface (54) follows an arcuate path. Indeed, in this example, the set-up shown provides a blade (40) having the form of a truncated sector of a circle whose centre is C with radii $\overline{CB}$. Because the centre is truncated the sides of the sector are the effective radii $\overline{AB}$. The arc of the sector is formed by the cutting edge $\overline{BB}$. However, any suitable shape of blade may be used in the present invention and a truncated sector is shown for an exemplary embodiment only. It is perfectly possible for an alternative blade (40) to be used such as that shown in figures 6a and 6b.

It will be understood by those skilled in the art that the defining features of the blades for use with the present invention are that they have a pivot point formed thereon by virtue of a circular recess in addition to the conventional drive means for such blades.

It is important to note that in both figures 6a and 6b corresponding components are similarly numbered with respect to the previous figures.

In use of the jigsaw as shown in the figures, the blade (40) will exhibit a linear reciprocating motion as shown most particularly by the arrows B-B about the central elongate slot (42) of figure 5. As can be seen from figures 5 and 6, the blades preferably are longer along their line of intended cutting than along any other dimension. This feature helps to achieve rigidity of the blade along its line of cutting. Unlike the prior art power tools therefore the blade is able to cut thick or rigid workpieces without suffering distortion or warping, particularly if the user wishes to cut an arcuate straight line in the workpiece. Furthermore, it is preferable that the line of action of the guide (26) is not in line with the cutting face (54) of the blade (40). This means that the blade is not supported at its opposite ends along its line of action but finds support within the body of the blade thereby to aid rigidity again and prevent distortion of the blade in use.

It will be apparent from the above that the blade is pivotally coupled both at its front portion where the elongate slot (42) mates with the stud (32) and its rear portion with the circular recess (52) mates with its corresponding stud (50). This means that the attitude of the jigsaw (2) does not change relative to the workpiece as the blade (40) is driven. It is only the blade (40) whose attitude relative to the workpiece (48) being cut changes.

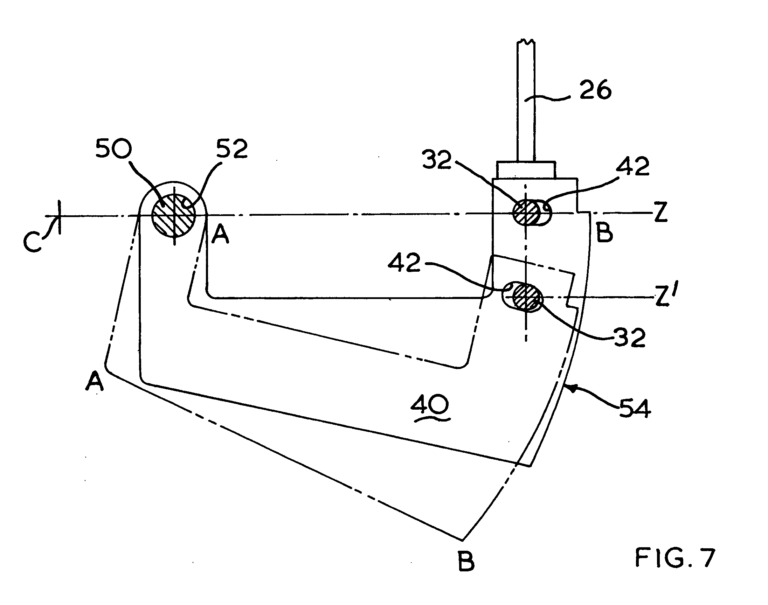

It will be apparent to those skilled in the art, as shown particularly from figures 2 and 3 that the jigsaw (2) may include conventional features such as a sole plate (56) which is used both to guide the blade in cutting of a workpiece and also may be pivoted about the axis D-D as shown in figure 2 so that bevel cutting of a workpiece may be achieved. Furthermore, with the shape of blade (40) illustrated in figures 2 and 3 (and also with the alternative shapes of blade illustrated in figures 6 and 7) it is desirable to be able to provide a reaction force against the force of blade during its upstroke through a workpiece, such a reaction force is most readily provided by the side plate (56). It can be seen from figure 2 that the sole plate (56) is split so that the blade (40) may pass centrally therethrough. In this manner the reaction to the upstroke of the blade felt by the sole plate (56) is evenly distributed by the sole plate either side of the split about the blade (40). This assists in maintaining the balance of the jigsaw (2) during use thereof.

Referring now to figure 7, there is illustrated schematically how the interaction of the stud (32) and elongate slot (42) functions during a cutting stroke. Clearly, because the rear of the blade (40) is pivotally mounted to central stud (50) via the circular recess (52), then the only permitted relative movement between the blade (40) (which, in figure 7, is numbered similarly to the numbering scheme of all the other figures in respect of corresponding elements) is that of pure pivoting. The oscillating drive imparted to the remote end of the blade to that of the pivot pint (50,52) which in this example is linear reciprocating action imparted to the blade (40) via the guide (26). This necessitates the elongate slot (42) being elongate rather than circular. This is because an allowance for translation of the stud (32) relative to the position where it is coupled to the blade (40) must be made. Such is the case when pivots about a fixed point. As figure 7 shows, the relative position of the stud (32) to any given point within the elongate slot (42) varies dependent upon the attitude of the blade (40) to the pivot point (50). This, of course, varies during the cutting stroke. In figure 7 the two extremes of the cutting stroke are illustrated and the length of the cutting stroke is given by the difference between these two extremes, Z and Z!

The invention as described above therefor provides a jigsaw in which the blade therefor is arcuate in shape and preferably is that of a sector and most preferably that of a truncated sector. Furthermore the arc of the sector is preferably the cutting edge (54) of the blade (40).

Furthermore, the invention as described above provides a jigsaw in which the blade therefor is mounted pivotally.

**Claims**

1. A power tool for cutting into, or through a workpiece, the tool including: a motor providing a rotary output; a motion translation mechanism coupled to the rotary output for converting said rotary output to an oscillating drive; a coupling mechanism for coupling a blade presented to the power tool and for use therewith to the motion translation mechanism, thereby to impart oscillating motion to said blade; the tool **characterised in that** a pivot point is provided on the power tool, which pivot point, in addition to the coupling mechanism, is coupled to the said blade presented to the power tool.

2. A power tool according to claim 1 wherein the pivot point is a fulcrum for the blade in use of the tool.

3. A power tool according to either claim 1 or claim 2 wherein the coupling mechanism is pivotally coupled to a blade presented and coupled thereto.

4. A power tool according to any one of the preceding claims wherein, in use of the power tool, a blade presented thereto will pivot about the pivot point.

5. A power tool according to any one of the preceding claims including a blade presented thereto and wherein the blade is longer along its line of intended cutting than along any other dimension of the blade.

6. A power tool according to any one of the preceding claims wherein the line of action of the coupling mechanism is not in line with the cutting face of a blade presented to the power tool.

7. A power tool according to any one of the preceding claims wherein the oscillating motion is a linear reciprocating motion.

8. A power tool substantially as hereinbefore described and with reference to the accompanying drawings.

9. A jigsaw **characterised in that** the blade therefor is arcuate in shape extends along a major axis and is driven along a line of axis perpendicular to this major axis and wherein the blade is arcuate in shape along a cutting surface which follows the driven line of axis.

10. A jigsaw according to claim 8 wherein the shape of the blade is that of a sector.

11. A jigsaw according to claim 9 wherein the arc of the sector is the cutting edge.

12. A jigsaw **characterised in that** the blade therefor is mounted pivotally.

FIG.1
PRIOR ART

FIG.2

FIG. 3

FIG. 4

FIG. 5

FIG. 6a

FIG. 6b

FIG. 7

**European Patent Office**

## EUROPEAN SEARCH REPORT

Application Number

EP 02 02 1573

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | FR 2 528 753 A (PEUGEOT OUTILLAGE ELECT) 23 December 1983 (1983-12-23) * the whole document * | 1-12 | B27B19/00 B23D61/02 |
| X | US 2 492 156 A (KUPJACK EUGENE J) 27 December 1949 (1949-12-27) * column 3, line 47 - column 4, line 5 * * figures 6,7 * | 1-12 | |
| X | PATENT ABSTRACTS OF JAPAN vol. 017, no. 059 (M-1363), 5 February 1993 (1993-02-05) -& JP 04 269117 A (MATSUSHITA ELECTRIC WORKS LTD), 25 September 1992 (1992-09-25) * abstract * | 1-4,6-12 | |
| A | | 5 | |

TECHNICAL FIELDS SEARCHED (Int.Cl.7)

B27B
B23D

The present search report has been drawn up for all claims

| Place of search | Date of completion of the search | Examiner |
|---|---|---|
| THE HAGUE | 9 January 2003 | Rijks, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 02 02 1573

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2003

| Patent document cited in search report | | Publication date | Patent family member(s) | Publication date |
|---|---|---|---|---|
| FR 2528753 | A | 23-12-1983 | FR 2528753 A1 | 23-12-1983 |
| US 2492156 | A | 27-12-1949 | NONE | |
| JP 04269117 | A | 25-09-1992 | NONE | |

EPO FORM P0459